# EUROPEAN PATENT SPECIFICATION

(11) **EP 1 936 514 B1**
(45) Date of publication and mention of the grant of the patent: **19.12.2012**
(21) Application number: 05816411.2
(22) Date of filing: 19.12.2005
(51) Int. Cl.: G06F 15/17, G06F 13/24, G06F 13/36, G06F 15/167, G06F 9/48, G06F 9/50

(54) **APPARATUS AND METHOD FOR CONTROLLING ISSUE OF REQUESTS TO ANOTHER OPERATION PROCESSING DEVICE**
VORRICHTUNG UND VERFAHREN ZUR STEUERUNG VON ANFRAGENAUSGABE FÜR EINE ANDERE OPERATIONSVERARBEITUNGSEINRICHTUNG
APPAREIL ET MÉTHODE DE CONTRÔLE D'ENVOI DE REQUÊTES VERS UN DISPOSITIF DE TRAITEMENT D'OPERATIONS

(30) Priority: 04.10.2005 JP 2005290888
(43) Date of publication of application: 25.06.2008
(73) Proprietor: Fujitsu Ltd., Kawasaki-shi, Kanagawa 211-8588 (JP)
(72) Inventor: SHIMIZUNO, Koken, Kanagawa 211-8588 (JP)
(74) Representative: Fenlon, Christine Lesley
(86) International application number: PCT/JP2005/023251
(87) International publication number: WO 2007/039933

(56) References cited:
- EP-A1- 0 911 736
- EP-A2- 0 817 091
- JP-A- 09 016 542
- JP-A- 11 282 821
- JP-A- 2003 288 284
- US-A- 5 892 957
- US-A1- 2003 172 335

## Description

### Technical Field

The present invention relates to a control technology within an operation processor apparatus such as a CPU, and particularly relates to a control technology for a cross call between the operation processor apparatuses.

### Background Art

The present invention is related to a cross call between CPUs, and is particularly intended to multi-CPU systems. The cross call is one of communication means between processors, and is an internal processor interrupt used by an OS to maintain memory consistency in virtual memory.

Technologies relating to the present invention include a technology disclosed in Patent Document 1 as an example to prevent a slow-response I/O read from occupying a read management table by separating and controlling memory read and management tables of I/O in a read control apparatus of computer systems employing a read-split technique that is a technique to release a system bus, until a response to a read request is returned to the request issue source.

For example, in addition, Patent Document 2 discloses a technology for the purpose of speeding up a common system bus to provide a versatile interface with a buffer function for connecting plural data processors, memory units and I/O interfaces to the system bus.

Both of these technologies are characterized in the configurations of the computer system, but are not directed to the internal configuration of the CPU.

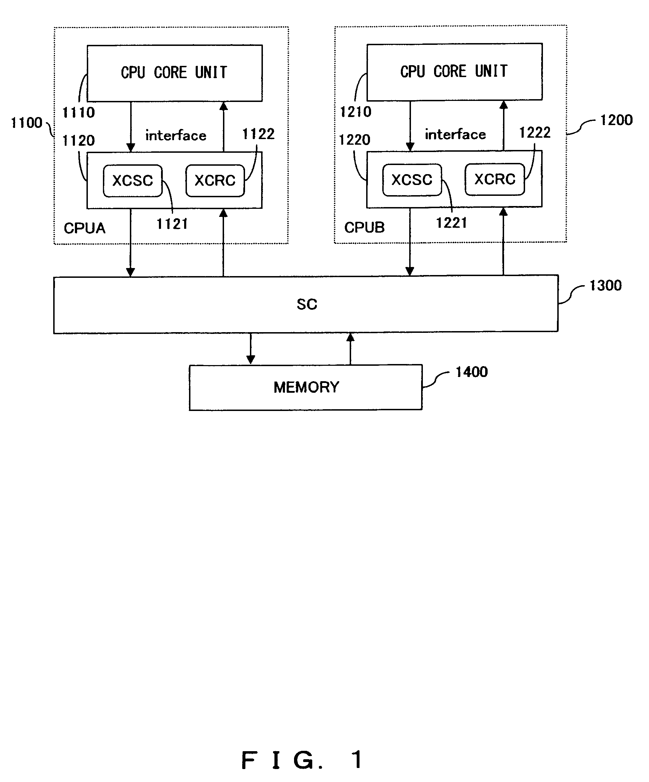

Here, an explanation of Fig. 1 is provided. Fig. 1 shows overview of a configuration example of a multi-CPU system. In this example, a CPUA 1100, a CPUB 1200, and memory 1400 are connected to a system controller (hereinafter referred to as "SC") 1300. Here, each of CPU core units 1110 and 1210 provided in the CPUA 1100 and the CPUB 1200, respectively, are connected to the SC 1300 via external interface units 1120 and 1220, respectively.

Control of the cross call is performed by the external interface units 1120 and 1220. Each of the external interface units 1120 and 1220 has one of cross call send controller (hereinafter referred to as "XCSC" (Cross Call Send Controller)) 1121 and 1221, respectively, and each of cross call receive controller (hereinafter referred to as "XCRC" (Cross Call Receive Controller)) 1122 and 1222.

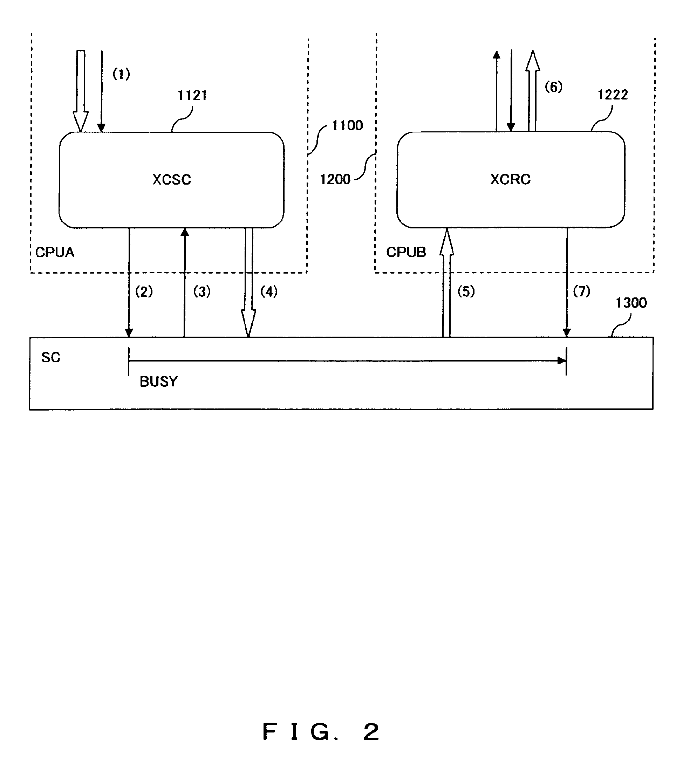

A flow of cross call transmission/reception in the system shown in Fig. 1 is explained with reference to Fig. 2.

First, when cross call data (a bold arrow) and an issue request of a cross call request (a thin arrow) are transmitted from the CPU core unit 1110 of the CPUA 1100, as shown by two arrows assigned with (1), the XCSC 1121, while buffering the data and the request, issues a cross call request (cross call request) to the SC 1300 as shown by an arrow assigned with (2).

As shown by an arrow assigned with (3), in accordance with the state of the destination (in this case the CPUB 1200), if the destination is not in the BUSY state, i.e. a BUSY bit indicating the state of the CPUB1200 is not set in a register within the SC 1300 itself, the BUSY bit is set (an arrow in the SC 1300 in Fig. 2) and an ACK (acknowledgement) is sent back to the CPUA 1100 that is the request source. On the other hand, if the destination has been in the BUSY state (i.e. the BUSY bit is set), a response of NACK (no acknowledgement) is sent back to the CPUA 1100.

The CPUA 1100, when receiving the ACK, transmits the cross call data to the SC 1300 as shown by an arrow assigned with (4). When receiving the NACK, on the other hand, the CPUA 1100 causes the XCSC 1121 to reissue a cross call request to the SC 1300 after a prescribed time period, and later, repeatedly causes the XCSC 1121 to issue the cross call request until the ACK is received.

The XCRC 1222 of the CPUB 1200 that is a receiver of the cross call, when receiving the cross call data transmitted from the SC 1300 as indicated by an arrow assigned with (5), writes the data in the internal register. The XCRC 1222 transmits a cross call reception notice (a thin arrow pointing outward) to the CPU core unit 1210 of the CPUB 1200 and passes the data (a bold arrow) at the same time as indicated by arrows assigned with (6). When the completion of the operation of receiving a cross call is informed from the CPU core unit 1210 (a thin arrow pointing inward), the XCRC 1222 issues to the SC 1300 a request to clear the BUSY bit indicating the state of the CPUB 1200, as indicated by an arrow assigned with (7). As a result, in the above explanation of operations in Fig. 2, a period of time from the issue of the cross call request (cross call request) from the CPUA to the SC indicated by the arrow of (2) to cancellation of the BUSY state by the CPUB to the SC indicated by the arrow of (7) is a BUSY period in the SC (indicated by an arrow above BUSY).

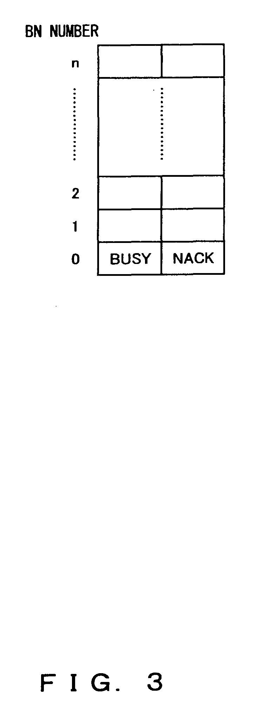

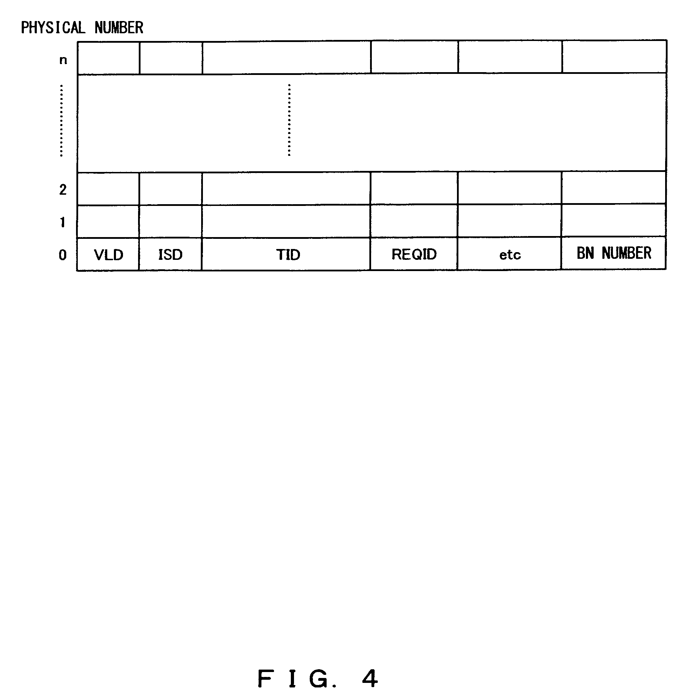

Each of the XCSC 1121 and 1221 has a data register, a status register for storing the cross call BUSY state (a cross call being issued) and the cross call NACK state (a cross call issue failed), and a command FIFO for storing the order of command issue and issued contents. An example of the structure of the status register is shown in Fig. 3, and an example of the structure of the command FIFO is shown in Fig. 4.

As shown in Fig. 3, the status register keeps and manages the BUSY state and the NACK state of a cross call, i.e. the processing states of the processing relating to the cross call, with respect to each of a pair number of BUSY and NACK (a BN number).

As shown in Fig. 4, the command FIFO is for keeping and managing the cross call issue history, and keeps various data for managing the command issue states as well as a target ID (TID) that is an identifier indicating CPU etc. that is an ultimate destination of the cross call to be issued to the SC 1300 and a request ID (REQID) that is an identifier indicating individual cross calls issued in sequence. In order to associate with the status register, the command FIFO also keeps the BN number. Note that the number of entries ensured in advance in the status register and the command FIFO correspond to the maximum number of the cross call issue requests issued by the CPU core units 1110 and 1210; however, the number should be determined according to the specification of the CPU core units 1110 and 1210.

As described above, in the past, because the status register and the command FIFO are provided separately, the BN number indicating the association of the two is kept in the command FIFO.

For that reason, because the number of entries for cross calls in the command FIFO increases with a consequence of recent increase of processors or processor cores that issue a cross call within a computer system such as large-scale SMP (Symmetrical Multi-Processor) systems and multi-core processors, there is a problem of an increase in hardware resources that is related to the cross call control.
Patent Document 1:
Japanese Patent Application Publication No. 11-110343
Patent Document 2:
Japanese Patent Application Publication No. 5-210622

US 5892957 discloses an apparatus and method for handling interrupt requests from any of a plurality of interrupters to any of a plurality of interrupt handlers. Each interrupt handler includes an interrupt input request queue for holding a plurality of incoming interrupt requests. A system controller is connected to the interrupters and the interrupt handlers, and includes an input queue coupled to each interrupter for receiving a plurality of interrupt requests. The system controller also includes an output queue coupled to each interrupt handler, and a counter for monitoring the current number of interrupt requests pending in each of the interrupt input queues in the interrupt handlers. When an interrupt request is sent from an interrupter, the system controller determines a target for the request, which may be by a target ID in the request or may be based upon a predetermined method to ensure even distribution of interrupt requests among all or a subset of the interrupt handlers.

EP 0817091 discloses a system and method for parallelising execution of memory transaction. When memory transactions requests are received at a memory controller from a data processor, data representing pending memory transactions are stored in one or more pending transaction buffers and a pending transaction status array. Logic in the memory controller determines whether or not the memory transaction associated with the most recently received memory transaction request can be performed before the other pending memory transaction, and then stores data representing this ordering determination in a transaction scoreboard. The memory controller performs the pending memory transactions in an order consistent with the memory transaction order data.

US 2003/0172335 discloses a dynamic end to end retry apparatus which uses transaction identification numbers (TID) combined with a path number and flow control class to uniquely account for all transactions in a multi-processor computer system. To accomplish this tracking function, a send_TID, representing the TID for the last transaction sent by a sending node to a given destination node, and a receive_TID, representing the TID of the last transaction that a destination node received and for which the destination node sent an acknowledgement (ACK) back to the sending node, may be stored in send TID and receive_TID tables at each node.

EP 0911736 discloses an architecture and coherency protocol for use in a large SMP computer system, which includes a hierarchical switch structure that allows for a number of multi-processor nodes to be coupled to the switch. Each of the multi-processor nodes includes a number of elements for maintaining memory coherency, including a victim cache, a directory and a transaction tracking table (TTT). One embodiment of the TTT includes an address field for storing the address of the cache line for a transaction that is currently in flight, a command field for storing the command associated with the cache line for the transaction currently in flight, a commander ID field for storing the processor number of the processor that initiated the command stored in the command field, and a number of status bits that reflect the status of the command as it is in flight.

It is an object of the present invention to control an increase of resources required for cross call control, which is caused by increased scale SMP, having multi-cores in a processor and making multi-threading of processing in a computer system.

In order to achieve the above object, the operation processor apparatus that is one of the aspects of the present invention as set out in claim 1 comprises a control unit for controlling transmission of a cross call issued to another operation processor apparatus, the control unit being configured to control transmission of the cross call directed to the another operation processor apparatus, to control transmission of an issue request of the cross call, and to control transmission of a transmission request of data of the process relating to the cross call, which transmissions are conducted to an arbitration unit for arbitrating a use right of a signal line leading a signal to the outside, and a storage unit for keeping for each cross call entry a processing state of a process relating to the cross call and an issue history of the cross call corresponding to the processing state, characterised in that the storage unit is configured to provide a shared storage area for storing an identifier for identification of the cross call, an identifier for identification of the issue request, and an identifier for identification of the transmission request, which identifiers form part of the issue history.

The operation processor apparatus according to the present invention may further comprise an identification unit for identifying the identifiers kept in the storage areas of the storage unit.

Additionally, in the operation processor apparatus according to the present invention, the identification unit may perform the identification based on information indicating a progress of the control by the control unit.

In addition, the operation processor apparatus according to the present invention can further comprise an issue request switching unit for switching the issue request and the transmission request based on a use state of the signal line, and outputting from the control unit to a signal line leading to the arbitration unit.

An information processor apparatus according to the present invention may have a plurality of operation processor apparatuses.

A transmission control method of a cross call that is another aspect of the present invention as set out in claim 5 is a method for controlling transmission of a cross call issued by an operation processor apparatus from the operation processor apparatus to another operation processor apparatus, and comprises a step of keeping for each cross call entry a processing state of a process relating to the cross call and an issue history of the cross call in a storage unit of the operation processor apparatus, characterised in that the step of keeping the processing state and the issue history include storing in a shared storage area in the storage unit an identifier for identification of the cross call, an identifier for identification of the issue request, and an identifier for identification of the transmission request, which identifiers form part of the issue history.

It should be noted that the transmission control method of a cross call according to the present invention may further comprise a step of identifying by the operation processor apparatus an identifier kept in the shared storage area of the storage unit after the step of keeping the processing state of the process relating to the cross call and the issue history of the corresponding cross call in the storage unit.

In addition, the transmission control method of a cross call according to the present invention can further comprise a step of switching the issue request and the transmission request based on the use state of the signal line, and outputting either one to an arbitration unit for arbitrating a use right of a signal line after the step of identifying the identifier.

According to the present invention, by having the above-described configuration, it is possible to obtain an effect such that increase of resources required for a cross call control due to multi-core computer systems and multi-threaded processing is controlled.

### Brief Description of the Drawings

Fig. 1 is a diagram showing an example of overall configuration of a multi-CPU system;
Fig. 2 is a diagram explaining a flow of cross call transmission/reception;
Fig. 3 is a diagram showing an example of the configuration of a status register;
Fig. 4 is a diagram showing a command FIFO;
Fig. 5 is a diagram showing the configuration of a multi-CPU system to which the present invention is implemented;
Fig. 6 is a diagram showing the configuration of an external interface unit of the CPUA shown in Fig. 5;
Fig. 7 is a diagram showing the configuration of the register shown in Fig. 6;
Fig. 8 is a diagram showing a flow of transmission control operations of a cross call by an XCSC;
Fig. 9 is a diagram showing an example of a circuit of an ID identification circuit;
Fig. 10 is a diagram showing an example of a circuit of an ID storage control circuit;
Fig. 11 is a diagram showing an example of a circuit of an issue request switching circuit;
Fig. 12 is a diagram showing an example of a configuration of a multi-CPU system consisting of CPU having plural CPU cores; and
Fig. 13 is a diagram showing a configuration of an external interface unit of the CPUA shown in Fig. 12.

### Best Mode for Carrying Out the Invention

Before the explanation of the embodiments of the present invention, first, internal operations of the XCSC 1121 when transmitting a cross call shown in the arrows of (1) through (4) in Fig. 2 are explained.

After that the cross call data transmitted from the CPU core unit 1110 is written in the data register, a write-in request, including a BN number designation, to the BUSY bit is transmitted from the CPU core unit 1110. In response to the request, at the same time as the BUSY bit of the designated BN number being set in the status register, the BN number is kept in the command FIFO, and a VLD (valid) bit is set. At that time, an issue request of XCALL_REQ (cross call request) is transmitted from the XCSC 1121 to an arbitration unit.

The arbitration unit is a block for arbitrating priority of the use of a bus (a signal line) between the CPU core unit 1110 and the SC 1300 and for taking a control so that command issues is efficiently performed in accordance with the specification, and is provided in the external interface unit 1120 (obviously, the arbitration unit is also provided in the external interface unit 1220 of the CPU 1200). When the bus use right is obtained in the arbitration unit, ISD (issued) bit corresponding to the BN number in the command FIFO is set, and the above-described XCALL_REQ is issued to the SC 1300.

At that time, if the NACK is returned from the SC 1300, the BUSY bit of the status register and the VALID bit of the command FIFO are cleared, and instead, the NACK bit of the status register is set in order to display an issue failure of the cross call. On the other hand, if the ACK is returned from the SC 1300, the data kept in the data register is issued to the SC 1300, and at the same time, the VLD bit and the ISD bit of the command FIFO and the BUSY bit of the status register are cleared.

The above operations are performed in the XCSC 1121.

In the past, in the above-described operations of the XCSC 1121, data transmission after receiving the ACK from the SC 1300 is always conducted after a fixed operation cycle and the transmission can be conducted immediately after the ACK reception. Consequently, a request signal for data transmission is not needed.

However, if the timing of the data transmission after the ACK reception is not fixed, issue of an issue request of a transmission request of data relating to a cross call (Slave Write Cross Call Request, hereinafter referred to as "SWXC_REQ") to the arbitration unit and control of the issue order of such data transmission would be necessitated. It should be noted that whether the data transmission timing after the ACK reception is fixed or not depends on the bus specification.

In addition, whether the ACK is returned from the SC 1300 in the issue order of the XCALL_REQ or not also depends on the bus specification. Accordingly, if the return of the ACK from the SC 1300 in the issue order of the XCALL_REQ is not ensured due to circumstances such as deletion of waiting circuit in the SC 1300 end, it is probable that the order of the responses is changed at the time of the SWXC_REQ.

For that reason, in order to handle the change of the order of the responses with the entry configuration of the above-described conventional command FIFO, a complicated control is needed due to the probability of the order being changed in the middle; however, if the number of control circuits is simply increased in each entry, since the number of entries of the cross call is large, significantly large resources are required.

Next, the embodiments of the present invention are explained with reference to the drawings.

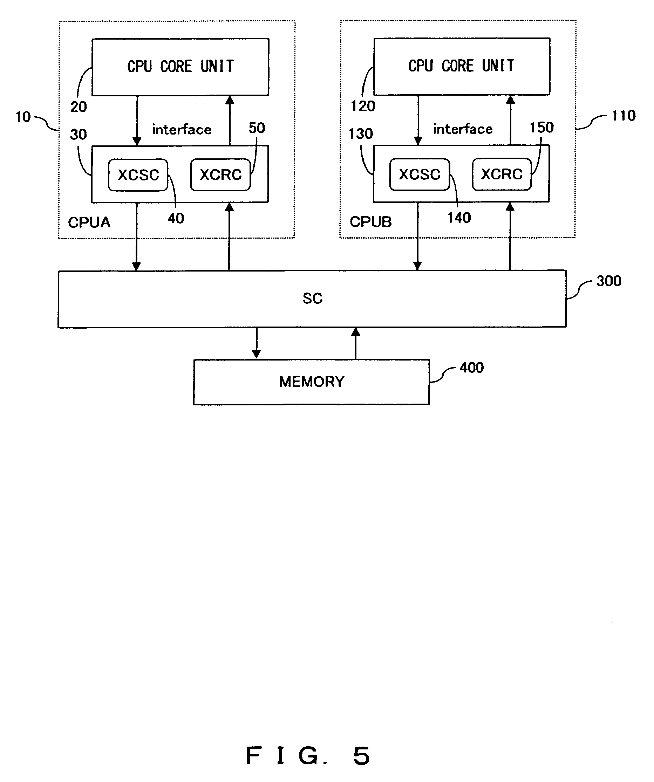

Fig. 5 shows a configuration of a multi-CPU system to which the present invention is implemented.

In Fig. 5, a CPUA 10, a CPUB 110, and memory 400 are connected to a SC 300. In this embodiment, each of CPU core units 20 and 120 in the CPUA 10 and the CPUB 110, respectively, is connected to the SC 300 via external interface units 30 and 130, respectively. To each of the external interface units 30 and 130, either XCSC 40 or 140 and either XCRC 50 or 150 are provided respectively. The cross call between CPUs in Fig. 5 is, as an example, executed between the CPUA 10 and the CPUB 110 via the SC 300.

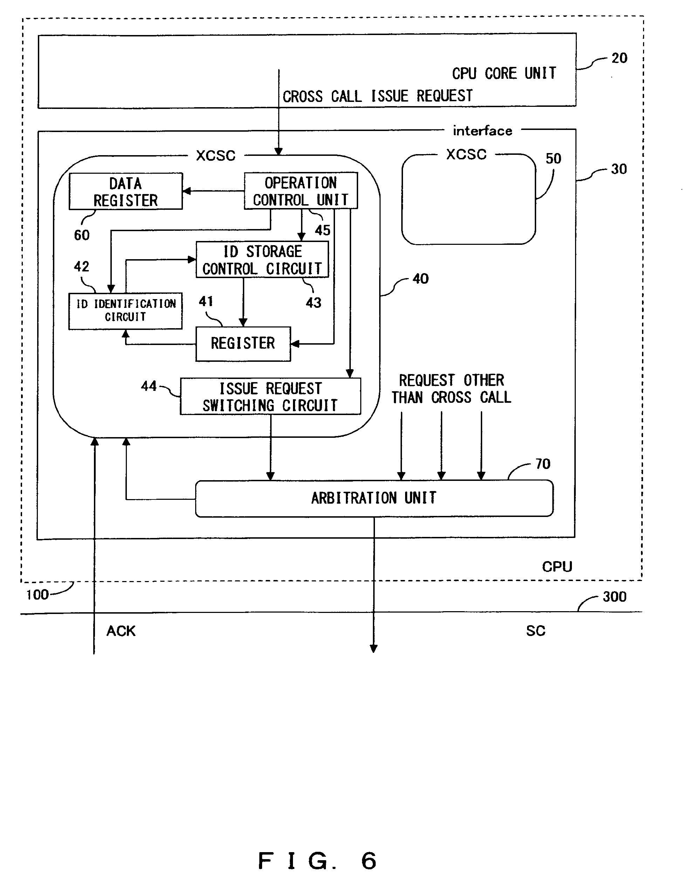

An explanation of Fig. 6 is provided next. Fig. 6 shows a configuration of the external interface unit of the CPUA 10 to which the present invention is implemented. It should be noted that although Fig. 6 shows the configuration of the external interface unit 30 of the CPUA 10 in Fig. 5, the eternal interface unit 130 of the CPUB 110 has the same configuration.

The CPU core unit 20 of the CPUA 10 is connected to the SC 300 via the external interface unit 30.

Control of a cross call is performed by the external interface unit 30. The external interface unit 30 has an XCSC 40, an XCRC 50, and an arbitration unit 70. Here, the XCSC 40 is for taking a control of cross call transmission, and the XCRC 50 is for taking a control of cross call reception. The arbitration unit 70 arbitrates the use right (priority) of a bus (a signal line) between the CPU core unit 20 and the SC 300, and takes a control so that the command issue is effectively performed in accordance with the specification.

The XCSC 40 has a register 41, an ID identification circuit 42, an ID storage control circuit 43, an issue request switching circuit 44, an operation control unit 45, and a data register 60.

The register 41 functions as a storage unit for collectively storing the BUSY state and NACK state of each cross call and command issue contents in order to manage the cross call.

The ID identification circuit 42 identifies an identifier (ID) kept in a prescribed storage area of the register 41 based on the status information indicating the progress of the control operation by the XCSC 40. The ID storage control circuit 43 selects an identifier to be kept in the prescribed storage area of the register 41 in accordance with the status indicating the progress of the control operation by the XCSC 40.

The issue request switching circuit 44 switches the cross call issue request and the transmission request of the data relating to the processing of the cross call in accordance with the status of use of the bus between the CPU core unit 20 and the SC 300.

The operation control unit 45 is for performing the operation control of the XCSC 40.

The data register 60 is for temporarily storing the cross call data transmitted from the CPU core unit 20.

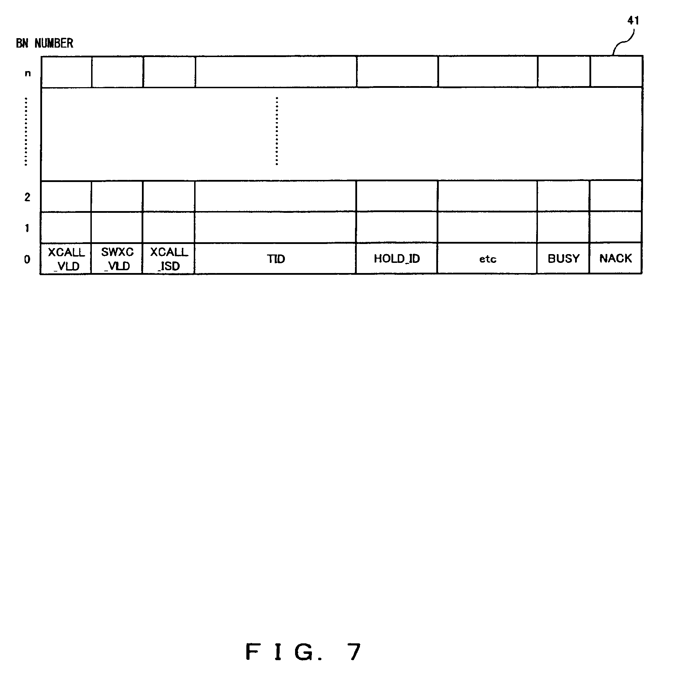

An explanation of Fig. 7 is provided next. Fig. 7 shows an example of the structure of the register 41 shown in Fig. 6.

As shown in Fig. 7, the register 41 keeps and manages the processing status of the processing relating to the cross call i.e. the state of the cross call BUSY state (a cross call being issued) and the cross call NACK state (a cross call issue failed) with respect to each entry of the cross call, i.e. each of the pair numbers (BN number) of BUSY and NACK in this case. In addition, in order to manage the cross call issue history, the register 41 keeps various data for managing the command issue status (indicated as "etc" in Fig. 7), and also keeps and manages a target ID (TID) that is an identifier indicating CPU etc. that is an ultimate destination of the cross call to be issued to the SC 1300 with respect to each BN number. Furthermore, the register 41 has a storage area referred to as HOLD_ID provided with respect to each BN number. In the storage area, any one of XCALL_REQ_ID, SWXC_REQ_ID and REQID is kept and managed.

Here, the XCALL_REQ_ID is an identifier individually assigned to each of issue requests in order to manage the issue requests of the XCALL_REQ (cross call request) that the XCSC 40 transmits to the arbitration unit 70.

The SWXC_REQ_ID is an identifier individually assigned to each of issue requests in order to manage the issue requests of the SWXC_REQ (a transmission request of data relating to processing of a cross call) that the XCSC 40 transmits to the arbitration unit 70.

Note that the REQID is an identifier for identifying individual cross calls.

By directly associating the processing status of the processing relating to a cross call with the issue history of the cross call and storing the two with respect to each entry of the cross call in the register 41, necessity of a storage area specialized to keep information for associating the above two is eliminated. Although each of the above identifiers is kept and managed in separate storage areas in the past, the storage area can be saved by sharing a single storage area as described above.

In order to manage these identifiers by sharing a single storage area, however, which of the above identifiers kept in the storage area must be identified. In the following description, the method of the identification is explained.

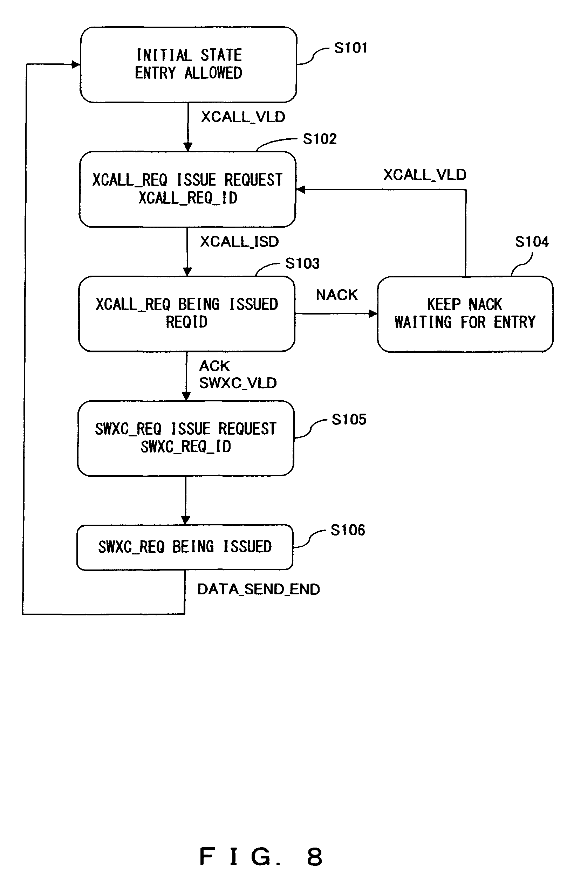

An explanation on Fig. 8 is provided. Fig. 8 shows a flow of transmission control operations of a cross call by the operation control unit 45 of the XCSC 40 in Fig. 6, and additionally represents transition of each bit of the XCALL_VLD, XCALL_ISD, and SWXC_VLD that are status information indicating the progress of the control operations.

First, S101 shows an initial state that is a state in which a cross call issued from the CPU core unit 20 and directed to another CPU connected to the SC 300 (CPUB 110 in a case of Fig. 5) can be received in the register 41.

In this step, an issue request of XCALL_REQ (a cross call request) and a BN number corresponding to the XCALL_REQ are, first, transmitted from the CPU core unit 20. The control operation proceeds to S102 in which the XCSC 40 writes cross call data subsequently transmitted from the CPU core unit 20 in the data register 60 and sets the BUSY bit in the entry of the register 41 corresponding to the BN number transmitted with the issue request. The XCSC 40 transmits issue request of the XCALL_REQ to the arbitration unit 70, sets the XCALL_VLD bit corresponding to the BN number and indicates the completion of the issues request transmission. Note that in addition to the issues request transmission, an XCALL_REQ_ID that is an identifier for identifying individual issue requests is generated and kept in the HOLD_ID in the corresponding entry in the register 41.

When a bus use right is obtained in the arbitration unit 70 in response to the issue request of the XCALL_REQ, the control operation proceeds to S103, and the XCSC 40 issues an XCALL_REQ to the SC 300, clears the XCALL_VLD bit in the entry the register 41, sets the XCALL_ISD bit in the entry instead, and indicates the completion of issues of the XCALL_REQ. Note that the XCSC 40 generates REQID that is an identifier for identifying individual XCALL_REQ, and transmits the REQID with the XCALL_REQ to the SC 300. In the HOLD_ID of the entry of the register 41, the REQID is kept instead of the XCALL_REQ_ID.

When NACK is returned from the SC 300 in response to the issue of the XCALL_REQ, the control operation proceeds to S104, the XCALL_ISD bit of the corresponding entry of the register 41 is cleared, the NACK bit of the corresponding entry is set instead, and the issue failure of the cross call is indicated, and retry of issue request of the cross call request by the CPU core unit 20 is waited. At that time, if the issue request of the cross call request from the CPU core unit 20 is received for another time after a prescribed period of time, for example, the control operation returns to S102, and the above-described control operations are conducted once again.

When the ACK is returned from the SC 300 in response to the issue of the XCALL_REQ, the control operation proceeds to S105, and the XCSC 40 transmits the issue request of the SWXC_REQ to the arbitration unit 70, clears the XCALL_ISD bit of the corresponding entry of the register 41, sets the SWXC_VLD bit of the corresponding entry instead, and indicates the completion of the issue request transmission. At that time, in addition to the issue request transmission, a SWXC_REQ_ID that is an identifier for identifying the individual issue requests is generated, and the SWXC_REQ_ID is kept instead of the REQID in the HOLD_ID of the corresponding entry of the register 41.

When the bus use right is obtained in the arbitration unit 70 in response to the issue request of the SWXC_REQ, the control operation proceeds to S106, and the XCSC 40 clears the SWXC_VLD bit of the corresponding entry of the register 41, transmits the SWXC_REQ including the data kept in the data register to the arbitration unit 70, and issues the data to the SC 300.

When the cross call data issue is completed in the above manner, the XCSC 40 clears the BUSY bit of the corresponding entry of the register 41, the control operation returns to S101, and the above-described control operations are conducted once again.

The contents of each entry of the register 41 corresponding to the designated BN number at the time of an issue request of a cross call request from the CPU core unit 20 changes as described above in accordance with the flow of the control operations of cross call transmission in the XCSC 40. Therefore, the identifier currently kept in the HOLD_ID in the corresponding entry can be identified based on the status of the corresponding entry, i.e. state of each bit of XCALL_VALID, XCALL_ISD, and SWXC_VLD.

Next, the ID identification circuit 42, the ID storage control circuit 43 and the issue request switching circuit 44 are explained.

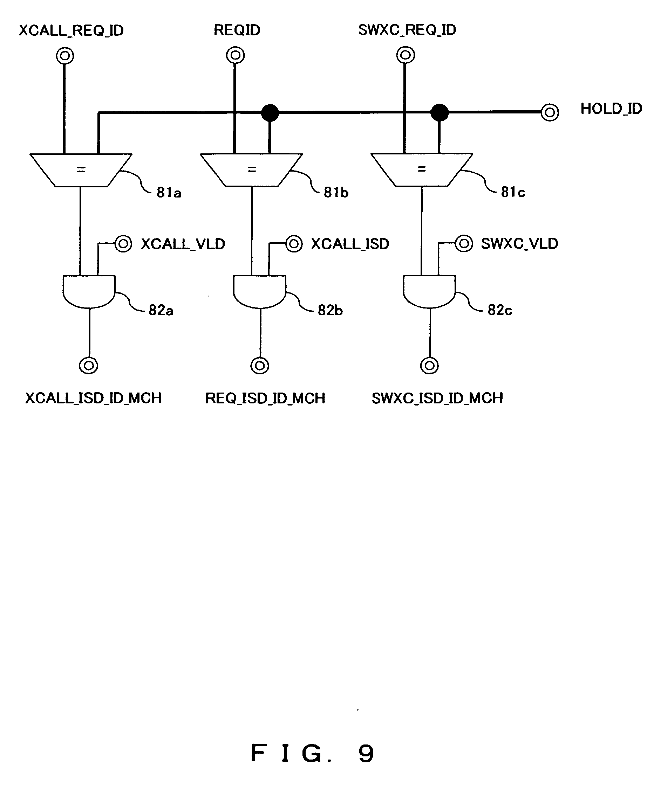

An explanation of Fig. 9 is provided first. Fig. 9 shows an example of the ID identification circuit 42. The ID identification circuit 42 determines what the identifier kept in the HOLD_ID of each entry of the register 41 indicates based on status information showing the progress of the above-described control operations by the XCSC 40. The ID identification circuit 42 is separately provided to each entry.

In Fig. 9, match circuits 81a, 81b, and 81c generates "H" level output only when identifiers (ID) input in each of two inputs match one another. AND circuits 82a, 82b, and 82c generate "H" level output only when both of the two inputs are in "H" level. Here, XCALL_ISD_ID_MCH that is an output of the AND circuit 82a is in "H" level when the identifier kept in the HOLD_ID of the entry to be determined of the register 41 is XCALL_REQ_ID. REQ_ISD_ID_MCH that is an output of the AND circuit 82b is in "H" level when the identifier kept in the HOLD_ID of the entry to be determined is REQ_ID. SWXC_ISD_ID_MCH is in "H" level when the identifier kept in the HOLD_ID of the entry to be determined is SWXC_REQ_ID.

In Fig. 9, as an input of the HOLD_ID, the identifier kept in the HOLD_ID of the entry corresponding to the designated BN number in the register 41 is input. As an input of each of XCALL_REQ_ID, REQID, and SWXC_REQ_ID in Fig. 9, an identifier with the same name generated in the manner described above in the XCSC 40 is input. In addition, as an input of each of XCALL_VLD, XCALL_ISD, and SWXC_VLD in Fig. 9 a state of each bit with the same name in the entry to be determined in the register 41 is input.

Consequently, according to the circuit shown in Fig. 9, only when the identifier kept in the HOLD_ID of the corresponding entry matches any one of the XCALL_REQ_ID, REQID, and SWXC_REQ_ID generated in the XCSC 40, one of the three outputs (XCALL_ISD_ID_MCH, REQ_ISD_ID_MCH and SWXC_ISD_ID_MCH) of the circuit in Fig. 9 becomes "H" level. In other words, if an XCALL_VLD flag of the entry to be determined is set (i.e. the XCSC 40 is performing the control operations up to S102 of Fig. 8), only the output of the XCALL_ISD_ID_MCH that represents the match of XCALL_REQ_ID and HOLD_ID at the time of XCALL_VALID in Fig. 9 becomes "H" level, and a determination result such that the identifier kept in the HOLD_ID of the corresponding entry is the XCALL_REQ_ID is indicated. In the same case, if the XCALL_ISD flag of the corresponding entry is set (i.e. the XCSC 40 is performing the control operations up to S103 of Fig. 8), only the output of the REQ_ISD_ID_MCH in Fig. 9 becomes "H" level, and a determination result such that the identifier kept in the HOLD_ID of the corresponding entry is the REQID is indicated. In the same case, furthermore, if the SWXC_VLD flag of the corresponding entry is set (i.e. the XCSC 40 is performing the control operations up to S105 of Fig. 8), only the output of the SWXC_ISD_ID_MCH in Fig. 9 becomes "H" level, and a determination result such that the identifier kept in the HOLD_ID of the corresponding entry is the SWXC_REQ_ID is indicated.

As explained above, by referring to the state of the output of the XCALL_ISD_ID_MCH, REQ_ISD_ID_MCH, and SWXC_ISD_ID_MCH, it is possible to identify the identifier kept in the HOLD_ID of the entry to be determined in the register 41.

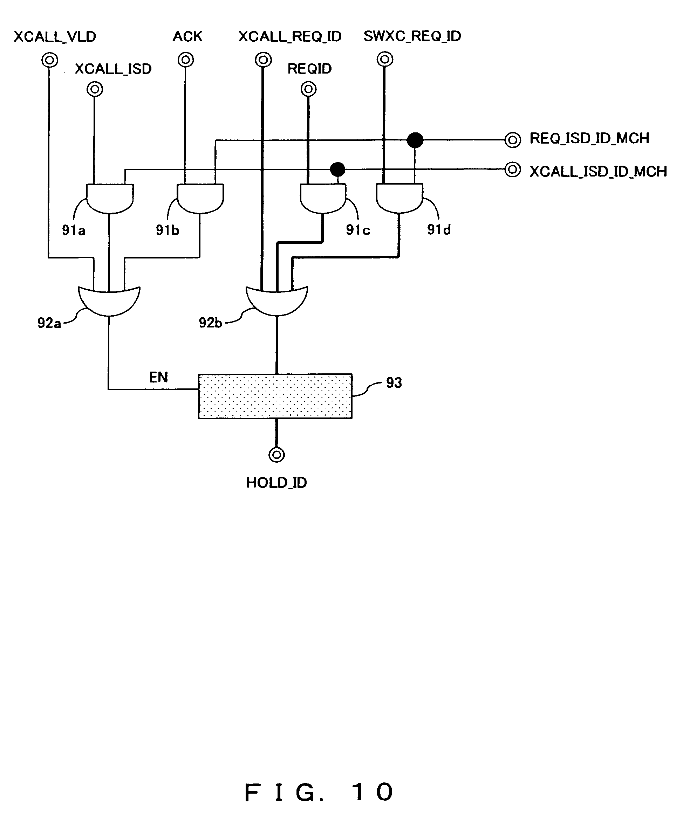

An explanation of Fig. 10 is provided next. Fig. 10 shows an example of a circuit of the ID storage control circuit 43. The ID storage control circuit 43 selects an ID to be kept in the HOLD_ID of the corresponding entry in accordance with the status of each entry of the register 41 using a part of the output from the ID identification circuit 42. Note that the ID storage control circuit 43 is also separately provided to each entry of the register 41.

In Fig. 10, an AND circuit 91a generates an "H" level output only when both of the two inputs are in "H" level, i.e. the XCALL_ISD bit of the corresponding entry is set, and the XCALL_ISD_ID_MCH output from the ID identification circuit 42 is in "H" level. The output indicates that the XCSC 40 performed the control operations of S103 in Fig. 8.

The AND circuit 91b generates an "H" level output, only when both of the two inputs are in "H" level i.e. when ACK is returned from the SC 300 and XREQ_ISD_ID_MCH output from the ID identification circuit 42 is in "H" level. The output indicates that the XCSC 40 performed the control operations of S105 in Fig. 8.

The AND circuit 91c outputs REQID generated by the XCSC 40 performing the control operation of S103 shown in Fig. 8 when XCALL_ISD_ID_MCH output from the ID identification circuit 42 is in "H" level i.e. when the identifier kept in the HOLD_ID of the entry to be determined in the register 41 is XCALL_REQ_ID.

The AND circuit 91d outputs SWXC_REQ_ID generated by the XCSC 40 performing the control operation of S105 shown in Fig. 8 when REQ_ISD_ID_MCH output from the ID identification circuit 42 is in "H" level i.e. when the identifier kept in the HOLD_ID of the entry to be determined in the register 41 is REQID.

The OR circuit 92a generates an "H" level output when at least one or more of the three inputs that are XCALL_ISD bit of the corresponding entry, the AND circuits 91a and 91b are in "H" level. Here, the XCALL_ISD bit of the corresponding entry is in "H" level when the XCSC 40 performs the control operation of S101 shown in Fig. 8. Accordingly, the output of the OR circuit 92a is "H" level when the XCSC 40 performs any of the control operations of S101, S103, and S105 shown in Fig. 8.

The OR circuit 92b output any one of XCALL_REQ_ID, REQID, and SWXC_REQ_ID that are identifiers exclusively input to each of the three inputs.

A storage area 93 represents an area of the HOLD_ID of the entry corresponding to the BN number designated in the register 41. There is "EN" indicated in Fig. 10, and the indication represents that the output of the OR circuit 92a operates as enable (ENABLE) of the data storage in the storage area 93. In other words, when the output of the OR circuit 92a is "H" level, i.e. when the XCSC 40 performs any of the control operations S101, S103, and S105 shown in Fig. 8, the storage area 93 operates so as to keep an identifier output from the OR circuit 92b.

It should be noted that in Fig. 10, the value of XCALL_REQ_ID is "0" when the XCALL_VLD bit is invalid.

Further explanation of the operation of the ID storage control circuit 43 shown in Fig. 10 is provided.

When the XCSC 40 performs the control operation of S102 shown in Fig. 8, XCALL_REQ_ID is generated and the XCALL_VLD bit is set. At that time, in the circuit in Fig. 10, the XCALL_REQ_ID is kept in the HOLD_ID (the storage area 63) in the entry of the register 41 corresponding to the BN number designated in the issue request of the cross call request transmitted from the CPU core unit 20.

When the XCSC 40 performs the control operation of S103 shown in Fig. 8, REQID is generated and the XCALL_VLD bit is cleared, and instead, the XCALL_ISD bit is set. At that time, since XCALL_REQ_ID is kept in the HOLD_ID of the corresponding entry, the output of the XCALL_ISD_ID_MCH in the circuit shown in Fig. 9 is "H" level. At such a time, consequently, since the OR circuit 92a becomes "H" level again, the REQID is kept in the HOLD_ID (the storage area 63) of the corresponding entry.

Afterwards, when the XCSC 40 performs the control operation of S105 shown in Fig. 8, SWXC_REQ_ID is generated, and the XCALL_ISD bit is cleared. At that time, ACK is returned from the SC 300. At the same time, since REQID is kept in the HOLD_ID of the corresponding entry, the output of the REQ_ISD_ID_MCH in the circuit of Fig. 9 is "H" level. At such a time, consequently, since the OR circuit 92a becomes "H" level again, SWXC_REQ_ID is kept in the HOLD_ID of the corresponding entry, and the value of the corresponding HOLD_ID is output.

As explained above, the ID storage control circuit 43 causes the HOLD_ID of each entry of the register 41 to keep the identifiers that need to be kept for internal processing of the XCSC 40 at every point of time in accordance with the flow of the transmission control operations of the XCSC 40.

As described above, by integrating the status register and the command FIFO that are separately provided in the past as the register 41, the storage area of the BN number provided in the command FIFO in the past is eliminated. By having the ID identification circuit 42 and the ID storage control circuit 43, the storage area for storing XCALL_REQ_ID, REQID, and SWXC_REQ_ID can be shared, and without increasing the storage area compared with the conventional art, control of increase in the hardware resources in the cross call control can be achieved.

The effect of control of increase in the hardware resources by control change of the entries of the register can be roughly estimated from (effect of increase control per entry)x(number of entries)x(strand count). Here, the strand count is the number of logical cores established per physical CPU core. Because both of the number of entries and the strand count are tend to increase due to the advancement of the multi-core of the CPUs and introduction of the multi-thread processing in the recent years, the effect of increase control should be a profound effect.

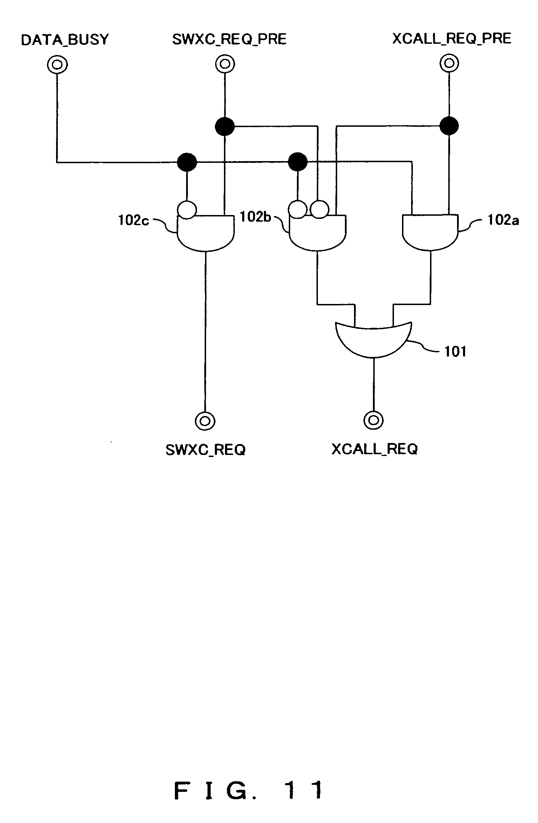

Fig. 11 is explained next. Fig. 11 shows an example of a circuit of the issue request switching circuit 44.

It is obvious that in the arbitration unit 70, even if the issue request of XCALL_REQ and the issue request of SWXC_REQ compete with each other, only either one of the two is selected but both of the two are never be selected at the same time. While the data transmission is performed via the bus, it is possible to issue a command that does not include other information such as XCALL_REQ; however, a command including other information such as SMXC_REQ that include data relating to cross call transmitted from the CPU core unit 20 cannot be issued.

In such a case, the XCSC 40 is controlled as below. In a period of time in which the BUSY flag indicating the status of use of the bus between the CPUA 10 and the SC 300 is on, i.e. in a period of time in which data transmission is performed via the bus, the control is such that the SWXC_REQ issue request is suppressed; however, the XCALL_REQ issue request is transmitted from the XCSC 40 to the arbitration unit 70 in such a period of time. On the other hand, in a period of time in which the BUSY flag is off, i.e. in a period of time in which the data transmission via the bus is not performed, the control is such that the SWXC_REQ issue request is preferentially transmitted to the arbitration unit 70, and when there is no SWXC_REQ issue request, the XCALL_REQ issue request is transmitted to the arbitration unit 70. Here, the issue request of XCALL_REQ and the issue request of SWXC_REQ corresponding to the identical BN number are not generated at the same time but are exclusively generated, and for that reason, the cross call operations are not disrupted by such a control.

The issues request switching circuit 44 is a circuit for performing such a control.

In Fig. 11, an OR circuit 101 generates an "H" level output when at least one or more of the two inputs is in "H" level, i.e. when at least one or more of each of the outputs of two AND circuits 102a and 102b is in "H" level.

Here, the output of the AND circuit 102a becomes "H" level only when an XCALL_REQ_PRE bit is in "H" level under a situation in which the BUSY bit (DATA_BUSY) indicating the status of use of the bus between the CPU core unit 20 and the SC 300 is set. Here, the XCALL_REQ_PRE bit is a bit set (to be in "H" level) in the XCSC 40 as a trigger for generating the XCALL_REQ issue request when the transmission control operation of the XCSC 40 shown in Fig. 8 proceeds to S102. In other words, when the XCALL_REQ issue request is generated under the situation such that the data transmission is performed via the bus between the CPU core unit 20 and the SC 300, the AND circuit 102a becomes "H" level.

The output of the AND circuit 102b becomes "H" level only when in the state in which the corresponding BUSY bit is not set and when the XCALL_ERQ_PRE bit becomes "H" level under the condition that the SWXC_REQ_PRE bit is "L" level. Here, the SWXC_REQ_PRE is a bit set (to be in "H" level) in the XCSC 40 as a trigger for generating the SWXC_REQ issue request when the transmission control operation of the XCSC 40 shown in Fig. 8 proceeds to S105. In other words, when the XCALL_REQ issue request is generated during a period of time in which the data transmission via the bus is not performed and a period of time in which there is no SWXC_REQ issue request, the AND circuit 102b becomes "H" level.

An OR circuit 71, only in the above two cases, recognizes the XCALL_REQ as "H" level and permits the transmission of the XCALL_REQ issue request to the arbitration unit 70.

On the other hand, the AND circuit 102a, only when the SWXC_REQ_PRE becomes "H" level under the condition such that the corresponding BUSY bit is not set, i.e. when the SWXC_REQ issue request is generated in a period of time in which the data transmission via the bus is not performed, recognizes the SWXC_REQ as "H" level, and permits the transmission of the SWXC_REQ issue request to the arbitration unit 70.

By having a circuit that operates as described above in the XCSC40, the wiring for the XCALL_REQ can be shared with the wiring for the SWXC_REQ from the XCSC 40 to the arbitration unit 70, and consequently, an amount of wiring around the arbitration unit 70 where the wiring is gathered for the arbitration with other requests from the CPU core unit 20 is decreased compared with a case in which the signal lines are individually connected to the arbitration unit 70.

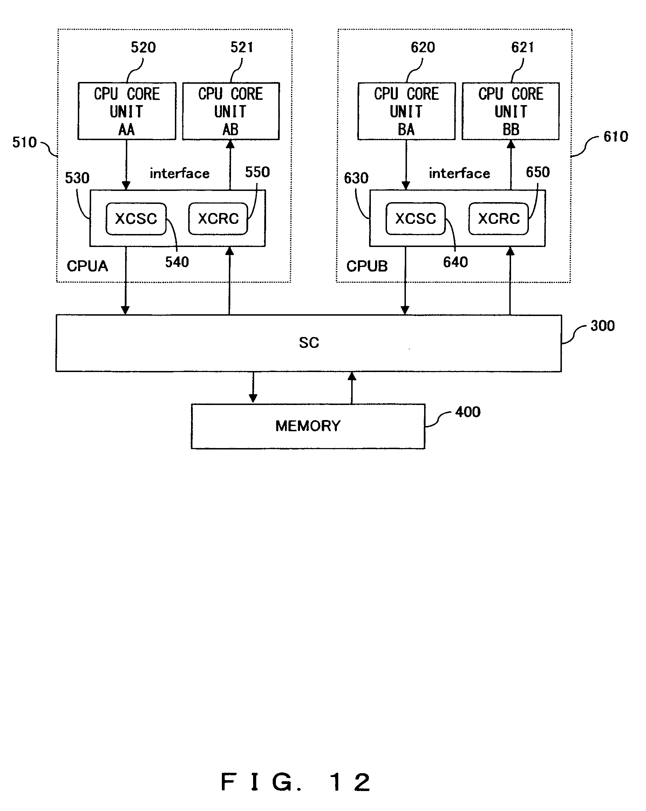

Next, another embodiment of the present invention is explained. The embodiment explained below is an embodiment in which a multi-CPU system is established from plural CPUs having CPU cores. The configuration of the multi-CPU system is shown in Fig. 12.

In Fig. 12, a CPUA 510, a CPUB 610, and memory 400 are connected to a SC 300. Here, the CPUA 510 has a CPU core unit AA520 and a CPU core unit AB521, and the CPUB 610 has a CPU core unit BA620 and a CPU core unit BB 621. Both of the CPU core unit AA 520 and the CPU core unit AB 521 are connected to the SC 300 via an external interface unit 530, and both of the CPU core unit BA620 and the CPU core unit BB621 are connected to the SC 300 via an external interface unit 630. In the external interface units 530 and 630, XCSCs 540 and 640, respectively, and XCRCs 550 and 650, respectively, are provided.

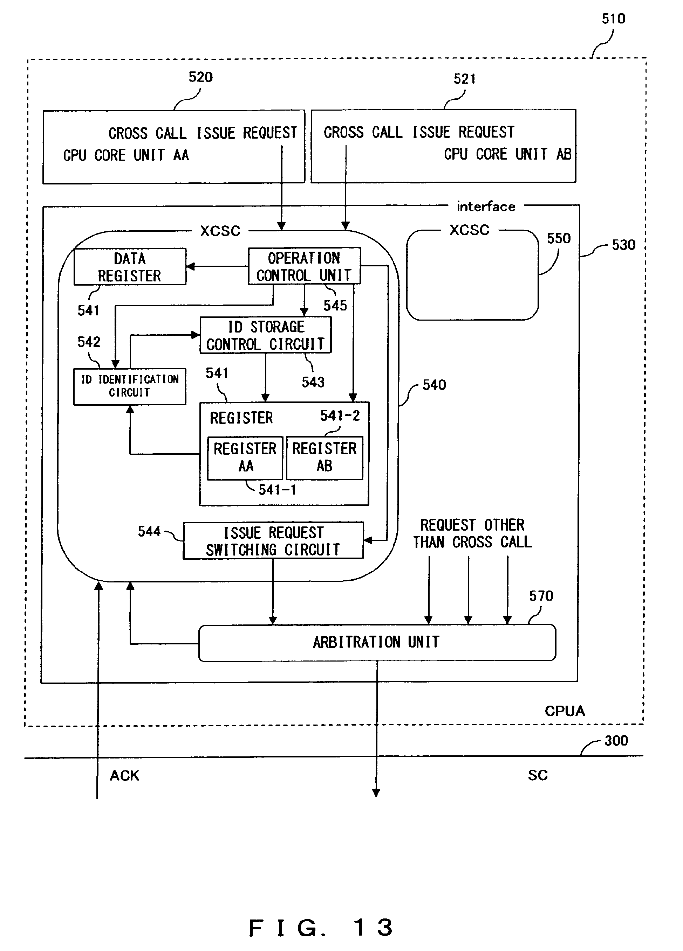

Fig. 13 is explained next. Fig. 13 shows the configuration of the external interface unit 530 of the CPUA 510 shown in Fig. 12. Note that the external interface unit 630 of the CPUB 610 shown in Fig. 12 has the same configuration.

Both of the CPU core unit AA520 and the CPU core unit AB521 of the CPUA 510 are connected to the SC 300 via the external interface unit 530.

The control of the cross call is performed by the external interface unit 530. The external interface unit 530 has an XCSC 540, an XCRC 550, and an arbitration unit 570. Here, the XCSC 540 performs transmission control of the cross call, the XCRC 550 performs reception control of the cross call. The arbitration unit 570 arbitrates the use right (priority order) of a bus (signal line) between two CPU core units 520 and 521 and the SC 300, and takes a control so that the command issue can be efficiently performed in accordance with the specification.

The configuration of the XCSC 540 has a register 542, an ID identification circuit 542, an ID storage control circuit 543, an issue request switching circuit 544, an operation control circuit 545, and a data register 560.

The register 541 functions as a storage unit for collectively storing the state of BUSY and NACK of each cross call and the contents of the issued command for management of the cross calls. Note that the register 541 has a register 541-1 for the CPU core unit AA520 and a register 541-2 for the CPU core unit AB521. The configurations of the registers 541-1 and 541-2 are the same as the configuration of the register 41 shown in Fig. 7.

The ID identification circuit 542 identifies an identifier (ID) kept in a prescribed storage area of the register 541 based on the status information that indicates the progress of the control operation by the XCSC 540, and has a configuration identical to that of the ID identification circuit 42 shown in Fig. 9. The ID storage control circuit 543 selects an identifier to be kept in the prescribed storage area of the register 541 in accordance with the status that indicates the progress of the control operations by the XCSC 540, and has a configuration identical to that of the ID storage control circuit 43 shown in Fig. 10.

The issue request switching circuit 544 switches the cross call issue request and the transmission request of the data relating to the processing of the cross call in accordance with the status of use of the bus between the two CPU core units 520, 521 and the SC 300, and has a configuration identical to that of the issue request switching circuit 44 shown in Fig. 11.

The operation control unit 545 is for performing the operation control of the XCSC 540, and the flow of the transmission control operations of a cross call of the XCSC 40 performed by the operation control unit 545 is identical to the flow shown in Fig. 8.

The data register 460 is for temporarily storing the cross call data transmitted from the two CPU core units 520 and 521.

As described above, even in a CPU having plural CPU cores, by integrating the status register and the command FIFO that are separately provided in the past as the registers 541-1 and 541-2 and providing for each CPU core, the storage area of the BN number provided in the command FIFO is eliminated in the past. By having the ID identification circuit 542 and the ID storage control circuit 543, as described above, the storage area for storing XCALL_REQ_ID, REQID, and SWXC_REQ_ID in the registers 541-1 and 541-2 can be shared, and as a result, without increasing the storage area compared with the conventional art, it is possible to handle the change in the specification in the cross call control.

In a CPU having plural CPU cores, the effect of control of increase in the hardware resources by control change of the entries of the register can be roughly estimated from (effect of increase control per entry )x(number of entries)×(strand count) × (number of CPU cores). Accordingly, like the CPU having a single CPU core described above, in the CPU having plural CPU cores, the effect of hardware increase control should be a profound effect.

Although the embodiments of the present invention are explained above, the present invention is not limited to each of the above-described embodiments but various modifications and variations can be made without departing from the scope of the invention.

## Claims

1. An operation processor apparatus (10), comprising:
a control unit (40) for controlling transmission of a cross call issued to another operation processor apparatus (110), the control unit (40) being configured to control transmission of the cross call directed to the another operation processor apparatus (110), to control transmission of an issue request of the cross call, and to control transmission of a transmission request of data of the process relating to the cross call, which transmissions are conducted to an arbitration unit (70) for arbitrating a use right of a signal line leading a signal to the outside of said operation processus apparatus (10) ;
and **characterised in** :
a storage unit (41) for keeping in each cross call entry a processing state of a process relating to the cross call
the storage unit (41) being configured to provide a shared storage area (HOLD_ID) within said each cross call entry for storing anyone of an identifier for identification of the cross call (REQID), an identifier for identification of the cross call issue request (XCALL REQ_ID), and an identifier for identification of the of transmission of data relating to processing of a cross call request) (SWXC_REQ_ID), thus associating the identifier currently stored in said shared storage area (HOLD_ID) for a particular cross call entry with the processing state kept in said cross call entry.

2. The operation processor apparatus (10) according to claim 1, further comprising:
an identification unit (42) for identifying the identifiers kept in the storage areas of the storage unit (41).

3. The operation processor apparatus (10) according to claim 2, wherein
the identification unit (42) performs the identification based on information indicating a progress of the control by the control unit (40).

4. The operation processor apparatus (10) according to claim 1, further comprising:
an issue request switching unit (44) for switching the issue request and the transmission request based on a use state of the signal line, and outputting from the control unit to a signal line leading to the arbitration unit (70).

5. An information processor apparatus having a plurality of operation processor apparatuses (10, 110) according to any of claims 1 to 4.

6. A transmission control method of a cross call for controlling transmission of a cross call issued by an operation processor apparatus from the operation processor apparatus (10) to another operation processor apparatus (110),
said cross all transmission control comprising control of transmission of the cross call directed to another operation processor apparatus (110), control of transmission of an issue request of the cross call and control of transmission of a transmission request of data of the process relating to the cross call, which transmissions are conducted to an arbitration unit (70) for arbitrating a use of right of a signal line leading to a signal to the outside of said operation processor apparatus (10), **characterised in** :
a step of keeping in each cross call entry a processing state of a process relating to the cross call in a storage unit (41) of the operation processor apparatus,
the step of keeping the processing state including storing in a shared storage area (HOLD_ID) within said each cross call entry in the storage unit (41) any one of an identifier for identification of the cross call (REQID), an identifier for identification of the cross call issue request (XCALL_REQ_ID), and an identifier for identification of the of transmission of data relating to processing of a cross call requests (SWXC_REQ_ID), thus associating the identifier currently stored in said shared storage area (HOLD_ID) for a particular cross call entry with the processing state kept in said cross call entry.

7. The transmission control method of a cross call according to claim 6, further comprising:
a step of identifying by the operation processor apparatus an identifier kept in the shared storage area of the storage unit (41) after the step of keeping the processing state of the process relating to the cross call and the issue history of the corresponding cross call in the storage unit.

8. The transmission control method of a cross call according to claim 6, further comprising:
a step of switching the issue request and the transmission request based on the use state of the signal line, and outputting either one to an arbitration unit (70) for arbitrating a use right of a signal line after the step of identifying the identifier.

## Patentansprüche

1. Operationsprozessorvorrichtung (10), umfassend:
eine Steuereinheit (40) zum Steuern der Sendung eines Queranrufs, der an eine andere Operationsprozessorvorrichtung (110) ausgegeben wird, welche Steuereinheit (40) konfiguriert ist, um die Sendung des an die andere Operationsprozessorvorrichtung (110) gerichteten Queranrufs zu steuern, um die Sendung einer Ausgabeanforderung des Queranrufs zu steuern und um die Sendung einer Sendeanforderung von Daten des Prozesses bezüglich des Queranrufs zu steuern, welche Sendungen an eine Entscheidungseinheit (70) zum Entscheiden über ein Nutzungsrecht einer Signalleitung geleitet werden, die ein Signal von der Operationsprozessorvorrichtung (10) nach außen führt; und
**gekennzeichnet durch** eine Speichereinheit (41) zum Halten, in jedem Queranrufeintrag, eines Verarbeitungszustandes eines Prozesses bezüglich des Queranrufs,
welche Speichereinheit (41) konfiguriert ist, um einen Gemeinschaftsspeicherbereich (HOLD_ID) innerhalb jedes genannten Queranrufeintrags vorzusehen, zum Speichern eines jeden von einem Identifikator zur Identifikation des Queranrufs (REQID), einem Identifikator zur Identifikation der Queranrufausgabeanforderung (XCALL_REQ_ID) und einem Identifikator zur Identifikation der Anforderung der Sendung von Daten bezüglich der Verarbeitung eines Queranrufs (SWXC_REQ_ID), wodurch dem gegenwärtig in dem Gemeinschaftsspeicherbereich (HOLD_ID) für einen besonderen Queranrufeintrag gespeicherten Identifikator der Verarbeitungszustand zugeordnet wird, der in dem Queranrufeintrag gehalten wird.

2. Operationsprozessorvorrichtung (10) nach Anspruch 1, ferner umfassend:
eine Identifikationseinheit (42) zum Identifizieren der Identifikatoren, die in den Speicherbereichen der Speichereinheit (41) gehalten werden.

3. Operationsprozessorvorrichtung (10) nach Anspruch 2, bei der
die Identifikationseinheit (42) die Identifikation basierend auf Informationen ausführt, die einen Fortschritt der Steuerung durch die Steuereinheit (40) angeben.

4. Operationsprozessorvorrichtung (10) nach Anspruch 1, ferner umfassend:
eine Ausgabeanforderungsumschalteinheit (44) zum Umschalten der Ausgabeanforderung und der Sendeanforderung basierend auf einem Nutzungszustand der Signalleitung und Ausgeben von der Steuereinheit an eine zu der Entscheidungseinheit (70) führende Signalleitung.

5. Informationsprozessorvorrichtung mit einer Vielzahl von Operationsprozessorvorrichtungen (10, 110) nach einem der Ansprüche 1 bis 4.

6. Sendungssteuerverfahren eines Queranrufs zum Steuern der Sendung eines Queranrufs, der durch eine Operationsprozessorvorrichtung ausgegeben wird, von der Operationsprozessorvorrichtung (10) an eine andere Operationsprozessorvorrichtung (110), welche Queranrufsendungssteuerung die Steuerung der Sendung des an die andere Operationsprozessorvorrichtung (110) gerichteten Queranrufs umfasst, die Steuerung der Sendung einer Ausgabeanforderung des Queranrufs und die Steuerung der Sendung einer Sendeanforderung von Daten des Prozesses bezüglich des Queranrufs, welche Sendungen an eine Entscheidungseinheit (70) zum Entscheiden über ein Nutzungsrecht einer Signalleitung geleitet werden, die ein Signal von der Operationsprozessorvorrichtung (10) nach außen führt,
**gekennzeichnet durch** einen Schritt zum Halten, in jedem Queranrufeintrag, eines Verarbeitungszustandes eines Prozesses bezüglich des Queranrufs in einer Speichereinheit (41) der Operationsprozessorvorrichtung,
wobei der Schritt zum Halten des Verarbeitungszustandes enthält: Speichern, in einem Gemeinschaftsspeicherbereich (HOLD_ID) innerhalb jedes genannten Queranrufeintrags in der Speichereinheit (41), eines jeden von einem Identifikator zur Identifikation des Queranrufs (REQID), einem Identifikator zur Identifikation der Queranrufausgabeanforderung (XCALL_REQ_ID) und einem Identifikator zur Identifikation der Anforderung der Sendung von Daten bezüglich der Verarbeitung eines Queranrufs (SWXC_REQ_ID), wodurch dem gegenwärtig in dem Gemeinschaftsspeicherbereich (HOLD_ID) für einen besonderen Queranrufeintrag gespeicherten Identifikator der Verarbeitungszustand zugeordnet wird, der in dem Queranrufeintrag gehalten wird.

7. Sendungssteuerverfahren eines Queranrufs nach Anspruch 6, ferner umfassend:
einen Schritt zum Identifizieren, durch die Operationsprozessorvorrichtung, eines Identifikators, der in dem Gemeinschaftsspeicherbereich der Speichereinheit (41) gehalten wird, nach dem Schritt zum Halten des Verarbeitungszustandes des Prozesses bezüglich des Queranrufs und des Ausgabeverlaufs des entsprechenden Queranrufs in der Speichereinheit.

8. Sendungssteuerverfahren eines Queranrufs nach Anspruch 6, ferner umfassend:
einen Schritt zum Umschalten der Ausgabeanforderung und der Sendeanforderung basierend auf dem Nutzungszustand der Signalleitung und Ausgeben einer der beiden an eine Entscheidungseinheit (70) zum Entscheiden über ein Nutzungsrecht einer Signalleitung nach dem Schritt zum Identifizieren des Identifikators.

## Revendications

1. Appareil de traitement d'opération (10), comprenant :
une unité de contrôle (40) pour contrôler la transmission d'un appel croisé émis vers un autre appareil de traitement d'opération (110), l'unité de contrôle (40) étant configurée pour contrôler la transmission de l'appel croisé dirigé vers l'autre appareil de traitement d'opération (110), pour contrôler la transmission d'une demande d'émission de l'appel croisé, et pour contrôler la transmission d'une demande de transmission de données du processus relatif à l'appel croisé, lesquelles transmissions sont conduites vers une unité d'arbitrage (70) pour arbitrer un droit d'utilisation d'une ligne de signaux amenant un signal vers l'extérieur dudit appareil de traitement d'opération (10) ;
**caractérisé par** :
une unité de stockage (41) pour conserver dans chaque entrée d'appel croisé un état de traitement d'un processus relatif à l'appel croisé,
l'unité de stockage (41) étant configurée pour fournir une zone de stockage partagée (HOLD_ID) à l'intérieur de ladite chaque entrée d'appel croisé pour stocker l'un quelconque parmi un identificateur pour l'identification de l'appel croisé (REQID), un identificateur pour l'identification de la demande d'émission d'appel croisé (XCALL_REQ_ID), et un identificateur pour l'identification de la demande de transmission de données relative au traitement d'un appel croisé (SWXC_REQ_ID), associant ainsi l'identificateur stocké actuellement dans ladite zone de stockage partagée (HOLD_ID) pour une entrée d'appel croisé particulière à l'état de traitement conservé dans ladite entrée d'appel croisé.

2. Appareil de traitement d'opération (10) selon la revendication 1, comprenant en outre :
une unité d'identification (42) pour identifier les identificateurs conservés dans les zones de stockage de l'unité de stockage (41).

3. Appareil de traitement d'opération (10) selon la revendication 2, dans lequel
l'unité d'identification (42) effectue l'identification sur la base d'informations indiquant une progression du contrôle par l'unité de contrôle (40).

4. Appareil de traitement d'opération (10) selon la revendication 1, comprenant en outre :
une unité de commutation de demande d'émission (44) pour commuter la demande d'émission et la demande de transmission sur la base d'un état d'utilisation de la ligne de signaux, et sortir de l'unité de contrôle à une ligne de signaux amenant à l'unité d'arbitrage (70).

5. Appareil de traitement d'opération ayant une pluralité d'appareils de traitement d'opération (10, 110) selon l'une quelconque des revendications 1 à 4.

6. Procédé de contrôle de transmission d'un appel croisé pour contrôler la transmission d'un appel croisé émis par un appareil de traitement d'opération de l'appareil de traitement d'opération (10) à un autre appareil de traitement d'opération (110), ledit contrôle de transmission d'appel croisé comprenant le contrôle de la transmission de l'appel croisé dirigé vers un autre appareil de traitement d'opération (110), le contrôle de la transmission d'une demande d'émission de l'appel croisé et le contrôle de la transmission d'une demande de transmission de données du processus relatif à l'appel croisé, lesquelles transmissions sont conduites vers une unité d'arbitrage (70) pour arbitrer un droit d'utilisation d'une ligne de signaux amenant un signal vers l'extérieur dudit appareil de traitement d'opération (10),
**caractérisé par** :
une étape consistant à conserver dans chaque entrée d'appel croisé un état de traitement d'un processus relatif à l'appel croisé dans une unité de stockage (41) de l'appareil de traitement d'opération,
l'étape consistant à conserver l'état de traitement incluant le stockage dans une zone de stockage partagée (HOLD_ID) à l'intérieur de ladite chaque entrée d'appel croisé dans l'unité de stockage (41) de l'un quelconque parmi un identificateur pour l'identification de l'appel croisé (REQID), un identificateur pour l'identification de la demande d'émission d'appel croisé (XCALL_REQ_ID), et un identificateur pour l'identification de la demande de transmission de données relative au traitement d'un appel croisé (SWXC_REQ_ID), associant ainsi l'identificateur stocké actuellement dans ladite zone de stockage partagée (HOLD_ID) pour une entrée d'appel croisé particulière à l'état de traitement conservé dans ladite entrée d'appel croisé.

7. Procédé de contrôle de transmission d'un appel croisé selon la revendication 6, comprenant en outre :
une étape consistant à identifier par l'appareil de traitement d'opération un identificateur conservé dans la zone de stockage partagée de l'unité de stockage (41) après l'étape consistant à conserver l'état de traitement du processus relatif à l'appel croisé et l'historique d'émission de l'appel croisé correspondant dans l'unité de stockage.

8. Procédé de contrôle de transmission d'un appel croisé selon la revendication 6, comprenant en outre :
une étape consistant à commuter la demande d'émission et la demande de transmission sur la base de l'état d'utilisation de la ligne de signaux, et sortir l'une ou l'autre vers une unité d'arbitrage (70) pour arbitrer un droit d'utilisation d'une ligne de signaux après l'étape consistant à identifier l'identificateur.
